(19) Europäisches Patentamt
European Patent Office
Office européen des brevets

(11) **EP 3 434 468 B1**

(12) **EUROPEAN PATENT SPECIFICATION**

(45) Date of publication and mention
of the grant of the patent:
**17.07.2019 Bulletin 2019/29**

(51) Int Cl.:
*B32B 7/12* (2006.01)    *B32B 27/08* (2006.01)
*B32B 27/18* (2006.01)    *B32B 27/20* (2006.01)
*B32B 27/22* (2006.01)    *B32B 27/30* (2006.01)
*B32B 27/32* (2006.01)    *B32B 1/02* (2006.01)
*B60K 15/03* (2006.01)

(21) Application number: **18184953.0**

(22) Date of filing: **23.07.2018**

(54) **FUEL CONTAINER AND PRODUCTION METHOD THEREFOR**

KRAFTSTOFFBEHÄLTER UND HERSTELLUNGSVERFAHREN DAFÜR

RÉCIPIENT À CARBURANT ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2017 JP 2017143129**

(43) Date of publication of application:
**30.01.2019 Bulletin 2019/05**

(73) Proprietor: **KURARAY CO., LTD.**
**Okayama 710-0801 (JP)**

(72) Inventors:
• **ITO, Yu**
**Kurashiki-shi, Okayama 7138550 (JP)**
• **SUZUKI, Makoto**
**Kurashiki-shi, Okayama 7138550 (JP)**
• **OKAMOTO, Makoto**
**Kurashiki-shi, Okayama 7138550 (JP)**

(74) Representative: **Müller-Boré & Partner**
**Patentanwälte PartG mbB**
**Friedenheimer Brücke 21**
**80639 München (DE)**

(56) References cited:
**EP-A1- 2 636 701    EP-A1- 2 641 735**

• **DATABASE WPI Week 200581 Thomson
Scientific, London, GB; AN 2005-796849
XP002787231, & WO 2005/105437 A1 (KURARAY
CO LTD) 10 November 2005 (2005-11-10)**

**Description**

The present invention relates to a fuel container having a layer made of a resin composition containing polyethylene and ethylene-vinyl alcohol copolymer, and a production method therefor.

Conventionally, a multilayered-structure containing a polyethylene layer and an ethylene-vinyl alcohol copolymer (hereinafter, ethylene-vinyl alcohol copolymer may be abbreviated as "EVOH") layer exhibiting excellent barrier properties has been used as a fuel container, taking advantage of its barrier property. Here, depending on the case, scraps and defective products generated during producing a fuel container are recovered and melt-molded to be reused as at least one layer in a fuel container comprising a polyethylene layer and an EVOH layer. Such recovery technique is useful in the light of waste reduction and economic efficiency, and thus employed in extensive applications.

However, when a recovered multilayered-structure material containing a polyethylene layer and an EVOH layer is reused, long-term continuous melt molding is difficult because thermal deterioration during melting molding causes gelation and/or deteriorated materials adhere to the inside of an extruder. Furthermore, there is a problem that contamination of a molded article with such deteriorated materials causes worsening of an appearance. Furthermore, a multilayered-structure having a resin composition layer containing such a recovered material may have insufficient impact resistance. These problems become more significant as reuse of the recovered multilayered-structure material is repeated. A fuel container mounted on an automobile or the like must be highly impact-resistant for ensuring safety. Given the situation, improvement of impact resistance is strongly needed.

Patent Reference No. 1 has described a fuel container where high-density polyethylene (a) layers are disposed over the inner and the outer sides of the ethylene-vinyl alcohol copolymer (c) layer via an adhesive resin (b) layer, and a thickness ratio (I/O) is less than 50/50, where a total thickness of the layers inside the (c) layer is "I", and a total thickness of the layers outside the (c) layer is "O". In Examples in Patent Reference No. 1, it is described that a multilayered fuel container having a structure of three-material, five-layered (high-density polyethylene/maleic anhydride-modified polyethylene/ethylene-vinyl alcohol copolymer/maleic anhydride-modified polyethylene/high-density polyethylene) is pulverized, pelletized, and supplied for reuse. However, when a multilayered fuel container having a resin composition layer containing such pellets is applied for long-term continuous molding, impact resistance may be insufficient.

Patent Reference No. 2 has described a mixed resin comprising polyolefin (A), saponified ethylene-vinyl acetate copolymer (B), and acid-modified olefin-carboxylic acid vinyl ester copolymer (C), wherein an olefin content of the acid-modified olefin-carboxylic acid vinyl ester copolymer (C) is 50 to 95 mol%, and a difference between an ethylene content of the saponified ethylene-vinyl acetate copolymer (B) and an olefin content of the acid-modified olefin-carboxylic acid vinyl ester copolymer (C) is within the range of 20 to 70 mol%. Patent Reference No. 2 has described that the use of the mixed resin allows for providing a molded article in which fish eyes, stripes and/or streaks are reduced, with the amount of deteriorated materials adhering to a screw, even in long-term continuous melt molding. In Examples in Patent Reference No. 2, there is described a mixed resin prepared by adding a maleic-anhydride modified ethylene-vinyl acetate copolymer with an acid modification amount of 0.03 to 0.33 mmol/g and a melt index of 12.4 to 18.2 g/10 min (190 °C, 2160 g load) and a pigment to a recovered material obtained by pulverizing a multilayered-structure containing a polypropylene layer with a melt index of 1.4 g/10 min (230 °C, 2160 g load), an adhesive resin layer and a saponified ethylene-vinyl acetate copolymer layer. However, when the mixed resin is subjected to long-term continuous melt molding, there still remain the problems that deteriorated materials may adhere to a screw and/or a die, and a molded article obtained may be insufficiently impact-resistant.

Patent Reference No. 3 has described a multilayer fuel container comprising a layer made from a composition comprising ethylene-vinyl alcohol copolymer, carboxylic acid-modified polyolefin, thermoplastic resin and another thermoplastic resin having functional groups chosen from boron acid groups and boron-containing groups convertible into boron acid groups in the presence of water.

Patent Reference No. 1: JP 9-29904 A
Patent Reference No. 2: WO 2012/060371
Patent Reference No. 3: WO 2005/105437 A1

To solve the above problems, an objective of the present invention is to provide a fuel container containing polyethylene and ethylene-vinyl alcohol copolymer with excellent impact resistance where the amount of deteriorated materials adhering to a screw and/or a die is reduced even when long-term continuous melt molding is conducted, and a production method therefor.

The present invention is defined as in the appended claims.

The above problems can be solved by providing a fuel container comprising a layer made of a resin composition (E) comprising polyethylene (A), EVOH (B), acid-modified polyethylene (C) and acid-modified polyethylene (D), wherein the resin composition (E) contains 0.1 to 20 parts by mass of EVOH (B), 0.1 to 20 parts by mass of acid-modified polyethylene (C) and 0.1 to 10 parts by mass of acid-modified polyethylene (D) based on 100 parts by mass of polyethylene (A); an MFR (190 °C, under 2.16 kg load) of the polyethylene (A) is 0.01 to 10 g/10 min; an acid value of the acid-modified polyethylene (C) is 0.1 to 9 mg KOH/g; an acid value of the acid-modified polyethylene (D) is more than 10 mg KOH/g and 120 mg KOH/g or less; and a ratio (D/A) of an MFR (190 °C, under 2.16 kg load) of the acid-modified polyethylene (D) to an MFR (190 °C, under 2.16 kg load) of the polyethylene (A) is 50 or more.

Preferably, the fuel container further has a polyethylene (A) layer, an EVOH (B) layer and an acid-modified polyethylene (C) layer, wherein the (A) layer or the resin composition (E) layer is disposed over the inner and the outer sides of the (B) layer via the (C) layer. Here, more preferably, a thickness ratio (I/O) is less than 50/50, where a total thickness of the layers inside the EVOH (B) layer is "I", and a total thickness of the layers outside the (B) layer is "O", and a thickness ratio (X/Y) where a thickness of the (B) layer is "X" and a total thickness is "Y" satisfies formula (1):

$$0.005 \leq (X/Y) \leq 0.13 \qquad (1).$$

For a fuel container of the present invention, the amount of deteriorated materials adhering to a screw and/or a die is reduced even when long-term continuous melt molding is conducted during production thereof, resulting in higher productivity. Furthermore, the fuel container exhibits excellent impact resistance with less stripes being generated. According to a production method of the present invention, the fuel container can be stably produced for a long period.

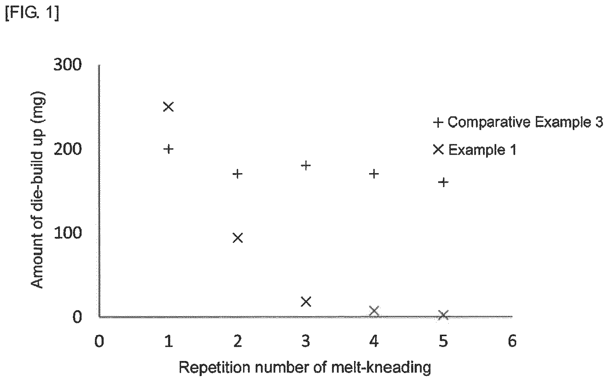

FIG. 1 is a plot of the amount of die-build up vs. the repetition number of melt-kneading in Example 1 and Comparative Example 3.

A fuel container of the present invention comprises a layer made of a resin composition (E) comprising polyethylene (A), EVOH (B), acid-modified polyethylene (C) and acid-modified polyethylene (D), wherein the resin composition (E) contains 0.1 to 20 parts by mass of EVOH (B), 0.1 to 20 parts by mass of acid-modified polyethylene (C) and 0.1 to 10 parts by mass of acid-modified polyethylene (D) based on 100 parts by mass of polyethylene (A); an MFR (190 °C, under 2.16 kg load) of the polyethylene (A) is 0.01 to 10 g/10 min; an acid value of the acid-modified polyethylene (C) is 0.1 to 9 mg KOH/g; an acid value of the acid-modified polyethylene (D) is more than 10 mg KOH/g and 120 mg KOH/g or less; and a ratio (D/A) of an MFR (190 °C, under 2.16 kg load) of the acid-modified polyethylene (D) to an MFR (190 °C, under 2.16 kg load) of the polyethylene (A) is 50 or more.

An MFR (melt flow rate, 190 °C, under 2.16 kg load) of the polyethylene (A) contained in the resin composition (E) must be 0.01 to 10 g/10 min. If an MFR of the polyethylene (A) is less than 0.01 g/10 min, a difference in a melt viscosity between the EVOH (B) and the polyethylene (A) is so large that the EVOH (B) is not sufficiently dispersed in the resin composition (E), and thus a fuel container obtained may have insufficient impact resistance. Meanwhile, if an MFR of the polyethylene (A) is more than 10 g/10 min, a fuel container obtained may have insufficient impact resistance. The MFR is preferably 5 g/10 min or less, more preferably 3 g/10 min or less, further preferably 2 g/10 min or less. In the light of giving a fuel container with particular excellent impact resistance, an MFR of polyethylene (A) is preferably 0.8 g/10 min or less, more preferably 0.4 g/10 min or less, further preferably 0.1 g/10 min or less. In the present invention, an MFR of a resin is measured in accordance with JIS K 7210. In the present invention, an MFR of a resin having a melting point of around 190 °C or higher than 190 °C is determined by a method that under 2160 g load, an MFR is measured at multiple temperatures equal to or higher than the melting point, and the measured values are plotted in a single logarithmic chart with a horizontal axis of an inverse of an absolute temperature and a vertical axis of a logarithm of an MFR, and an extrapolated value to 190 °C is used. In the present invention, when the polyethylene (A) is a mixture of multiple types of resins, an MFR of the polyethylene (A) is determined by weighted-averaging MFRs of the individual resins with a mixing mass ratio. Likewise, when the EVOH (B), the acid-modified polyethylene (C) or the acid-modified polyethylene (D) is a mixture of multiple types of resins, an MFR of each material is determined as described for the polyethylene (A).

Examples of the polyethylene (A) include polyethylenes such as a low-density polyethylene, a straight-chain low-density polyethylene, a medium-density polyethylene and a high-density polyethylene; and ethylenic copolymers produced by copolymerizing ethylene with an α-olefin such as 1-butene, 1-hexene and 4-methyl-1-pentene. The polyethylene (A) can be used alone or in combination of two or more. Among these, the polyethylene (A) is preferably polyethylene, more preferably a high-density polyethylene.

The EVOH (B) contained in the resin composition (E) can be produced by saponifying an ethylene-vinyl ester copolymer. Typically, the vinyl ester is vinyl acetate, but other fatty acid vinyl esters (vinyl propionate, vinyl pivalate, and so on) can be also used. An ethylene content in the EVOH (B) is preferably 20 to 60 mol%. If an ethylene content is less than 20 mol%, thermal stability of the EVOH (B) in the resin composition (E) may be lowered. An ethylene content is more preferably 23 mol% or more. If an ethylene content is more than 60 mol%, barrier properties may be deteriorated. An ethylene content is more preferably 55 mol% or less, further preferably 50 mol% or less. Meanwhile, a saponification degree of the vinyl ester units in the EVOH (B) is preferably 80 % or more, more preferably 98 % or more, further preferably 99 % or more in the light of barrier properties. An ethylene content and a saponification degree in the EVOH (B) can be determined by nuclear magnetic resonance (NMR) spectroscopy.

In the EVOH (B), polymerizable monomers other than ethylene and a vinyl ester can be copolymerized, as long as they do not inhibit the effects of the present invention, generally within the range of 5 mol% or less. Examples of such a polymerizable monomer include α-olefins such as propylene, 1-butene, 1-hexene and 4-methyl-1-pentene; (meth)acrylates; alkyl vinyl ethers; N-(2-dimethylaminoethyl)methacrylamide or its quaternized derivatives; N-vinylimidazole or its quaternized derivatives; N-vinylpyrrolidone; N,N-butoxymethylacrylamide; vinyltrimethoxysilane; vinylmethyldimethoxysilane; and vinyldimethylmethoxysilane.

An MFR (melt flow rate) (measured at 210 °C under 2160 g load) of the EVOH (B) used in the present invention is suitably 0.1 to 100 g/10 min. If an MFR of the EVOH (B) is more than 100 g/10 min, a difference in a melt viscosity between the EVOH (B) and the acid-modified polyethylene (C) is so large that the EVOH (B) may not be sufficiently dispersed in the resin composition (E), leading to decrease in thermal stability. An MFR of the EVOH (B) is more suitably 50 g/10 min or less, further suitably 30 g/10 min or less. Meanwhile, if an MFR of the EVOH (B) is less than 0.1 g/10 min, a difference in a viscosity between the EVOH (B) and the acid-modified polyethylene (D) is so large that the EVOH (B) may be insufficiently dispersed in the resin composition (E), leading to insufficient impact resistance. The MFR is more suitably 0.5 g/10 min or more.

A content of the EVOH (B) in the resin composition (E) is 0.1 to 20 parts by mass based on 100 parts by mass of polyethylene (A). If a content of the EVOH (B) is more than 20 parts by mass, fouling on a screw and/or a die increases during melt-kneading of the resin composition (E), and impact resistance of a fuel container obtained decreases. The content is preferably 15 parts by mass or less. Meanwhile, if a content of the EVOH (B) is less than 0.1 parts by mass, problems such as fouling on a screw and/or a die due to the EVOH (B) and deterioration in impact resistance are hard to occur, and therefore, the present invention is less beneficial. The content is suitably 1 parts by mass or more.

Examples of the acid-modified polyethylene (C) contained in the resin composition (E) include a graft-modified polyethylene produced by graft-modifying polyethylene with an acid, and an ethylenic copolymer produced by copolymerizing ethylene with an acid. These can be used alone or in combination of two or more. Among these, a graft-modified polyethylene is suitable as the acid-modified polyethylene (C). In the light of higher compatibility with the polyethylene (A), the acid-modified polyethylene (C) is preferably obtained by acid-modifying the same type of polyethylene as the polyethylene (A).

A graft-modified polyethylene used as the acid-modified polyethylene (C) can be that obtained by graft-modifying the above polyethylene used as the polyethylene (A) with an acid. An acid for grafting onto polyethylene can be an unsaturated carboxylic acid or its derivative such as acrylic acid, methacrylic acid, fumaric acid, itaconic acid, maleic acid, maleic anhydride and itaconic anhydride. Among these, a maleic-anhydride graft-modified polyethylene is most suitable.

An ethylenic copolymer used as the acid-modified polyethylene (C) can be that obtained by copolymerizing an acid as a copolymerization component with the above polyethylene used as the polyethylene (A). The acid used can be those mentioned as an acid which is grafted onto polyethylene.

An acid value of the acid-modified polyethylene (C) is 0.1 to 9 mg KOH/g. The acid-modified polyethylene (C) having such an acid value exhibits excellent in adhesiveness to the polyethylene (A) and the EVOH (B), and is, therefore, used as an adhesion layer in a fuel container having a polyethylene (A) layer and an EVOH (B) layer. It is generally contained in the resin composition (E), when the resin composition (E) is produced using a recovered fuel-container material. The acid-modified polyethylene (C) contained in the resin composition (E) improves dispersibility of the EVOH (B) in the resin composition (E) and thus improves impact resistance of a fuel container. If an acid value of the acid-modified polyethylene (C) is less than 0.1 mg KOH/g, dispersibility of the EVOH (B) in the resin composition (E) is lowered, impact resistance of a fuel container obtained is lowered, and adhesiveness of the acid-modified polyethylene (C) to the polyethylene (A) and the EVOH (B) is also lowered. An acid value of the acid-modified polyethylene (C) is suitably 0.5 mg KOH/g or more. Meanwhile, if an acid value of the acid-modified polyethylene (C) is more than 9 mg KOH/g, viscosity matching in resins constituting a multilayered-structure before recovery may be deteriorated, leading to an uneven layer thickness. An acid value of the acid-modified polyethylene (C) is suitably 7 mg KOH/g or less, more suitably 5 mg KOH/g or less, further suitably 3 mg KOH/g or less. If the acid-modified polyethylene (C) is a mixture of multiple types of resins, an acid value of the acid-modified polyethylene (C) is determined by weighted-averaging acid values of the individual resins with a mixing mass ratio.

An MFR (melt flow rate, 190 °C, under 2.16 kg load) of the acid-modified polyethylene (C) is suitably 0.1 to 100 g/10 min. With an MFR of the acid-modified polyethylene (C) within the range, balance between viscosity of the acid-modified polyethylene (C) and viscosity of the polyethylene (A) and the acid-modified polyethylene (D) is improved when the resin composition (E) is produced using a recovered multilayered-structure material having the polyethylene (A) layer and the EVOH (B) layer. Consequently, dispersibility of the EVOH (B) is further improved and thus, a fuel container produced has further improved impact resistance.

A content of the acid-modified polyethylene (C) in the resin composition (E) is 0.1 to 20 parts by mass based on 100 parts by mass of the polyethylene (A). If a content of the acid-modified polyethylene (C) is less than 0.1 parts by mass, dispersibility of the EVOH (B) in the resin composition (E) is deteriorated, leading to lower impact resistance of a fuel container obtained. The content is suitably 0.5 parts by mass or more, more suitably 2 parts by mass or more. Meanwhile, if a content of the acid-modified polyethylene (C) is more than 20 parts by mass, impact resistance of a fuel container obtained may be lowered.

Examples of the acid-modified polyethylene (D) contained in the resin composition (E) include a graft-modified polyethylene produced by graft-modifying polyethylene with an acid and an ethylenic copolymer produced by copolymerizing ethylene with an acid. These can be used alone or in combination of two or more. Among these, the acid-modified polyethylene (D) is suitably a graft-modified polyethylene. In the light of compatibility with the polyethylene (A), the acid-modified polyethylene (D) is preferably obtained by acid-modifying the same type of polyethylene as the polyethylene (A) with an acid. Furthermore, a total content of $\alpha$-olefin units in the acid-modified polyethylene (D) is more than 95 mol% or more.

An example of a graft-modified polyethylene used as the acid-modified polyethylene (D) can be that obtained by graft-modifying the above polyethylene used as the polyethylene (A) with an acid. Here, the acid used can be selected from those used for producing the acid-modified polyethylene (C). Among these, a maleic-anhydride graft-modified polyethylene is most suitably used.

An ethylenic copolymer used as the acid-modified polyethylene (D) can be that obtained by copolymerizing an acid as a copolymerization component with the above polyethylene used as the polyethylene (A). Here, the acid used can be selected from those above-described in producing the acid-modified polyethylene (C).

An acid value of the acid-modified polyethylene (D) is more than 10 mg KOH/g and 120 mg KOH/g or less. The acid-modified polyethylene (D) having such a high acid value contained in the resin composition (E) allows for reducing the amount of deteriorated materials adhering to a screw and/or a die even in the case of long-term continuous melt molding of the resin composition (E), as well as improving impact resistance of a fuel container obtained. An acid value of the acid-modified polyethylene (D) is suitably 12 mg KOH/g or more, more suitably 18 mg KOH/g or more, further suitably 25 mg KOH/g or more, particularly suitably 35 mg KOH/g or more, most suitably 40 mg KOH/g or more. Meanwhile, an acid value of the acid-modified polyethylene (D) is suitably 100 mg KOH/g or less, more suitably 70 mg KOH/g or less. When the acid-modified polyethylene (D) is a mixture of multiple types of resins, an acid value of the acid-modified polyethylene (D) is determined by weighted-averaging acid values of the individual resins with a mixing mass ratio.

A content of the acid-modified polyethylene (D) in the resin composition (E) is 0.1 to 10 parts by mass based on 100 parts by mass of the polyethylene (A). If a content of the acid-modified polyethylene (D) is less than 0.1 parts by mass, the amount of deteriorated materials adhering to a screw and/or a die cannot be reduced and impact resistance of a fuel container obtained cannot be improved. A content of the acid-modified polyethylene (D) is suitably 0.5 parts by mass or more, more suitably 1 parts by mass or more. Meanwhile, if a content of the acid-modified polyethylene (D) is more than 10 parts by mass, the acid-modified polyethylene (D) may excessively react with the EVOH (B), leading to lowering thermal stability of the resin composition (E). A content of the acid-modified polyethylene (D) is suitably 8 parts by mass or less.

An MFR (melt flow rate, 190 °C, under 2.16 kg load) of the acid-modified polyethylene (D) is suitably 5 g/10 min or more. If an MFR of the acid-modified polyethylene (D) is less than 5 g/10 min, fouling on a screw or a die may increase during melt-kneading of the resin composition (E), and impact resistance of a fuel container obtained may decrease. An MFR of the acid-modified polyethylene (D) is more suitably 10 g/10 min or more, further suitably 15 g/10 min or more, particularly suitably 20 g/10 min or more. Meanwhile, an MFR of the acid-modified polyethylene (D) is generally 1000 g/10 min or less.

A ratio (D/A) of an MFR (190 °C, under 2.16 kg load) of the acid-modified polyethylene (D) to an MFR (190 °C, under 2.16 kg load) of the polyethylene (A) in the resin composition (E) must be 50 or more. Thus, the amount of deteriorated materials adhering to a screw and/or a die is reduced even when long-term continuous melt molding of the resin composition (E) is conducted, as well as improving impact resistance of a fuel container obtained. The ratio (D/A) is suitably 100 or more, more suitably 150 or more, further suitably 200 or more, particularly suitably 400 or more, most suitably 500 or more. Meanwhile, the ratio (D/A) is suitably 20000 or less, more suitably 10000 or less, further suitably 5000 or less, particularly suitably 2000 or less.

It is suitable that a difference between an acid value of the acid-modified polyethylene (C) and an acid value of the acid-modified polyethylene (D) in the resin composition (E) is 10 mg KOH/g or more. If the acid value difference is less than 10 mg KOH/g, the amount of fouling on a screw and/or a die may increase during melt-kneading of the resin composition (E), and impact resistance of a fuel container obtained may decrease. A difference between an acid value of the acid-modified polyethylene (C) and an acid value of the acid-modified polyethylene (D) is more suitably 15 mg KOH/g or more, further suitably 20 mg KOH/g or more, particularly suitably 25 mg KOH/g or more, most suitably 30 mg KOH/g or more.

The resin composition (E) can contain additives other than the polyethylene (A), the EVOH (B), the acid-modified polyethylene (C) and the acid-modified polyethylene (D) as long as they do not inhibit the effects of the present invention. Examples of such an additive include an antioxidant, an ultraviolet absorber, a plasticizer, a lubricant, a filler and an antistatic. Specific examples of the additives are as described below. A content of the other additives in the resin composition (E) is generally 50 % by mass or less, suitably 20 % by mass or less, more suitably 10 % by mass or less.

Antioxidant: 2,5-di-t-butylhydroquinone, 2,6-di-t-butyl-p-cresol, 4,4'-thiobis(6-t-butylphenol), 2,2'-methylenebis(4-methyl-6-t-butylphenol), octadecyl-3-(3',5'-di-t-butyl-4'-hydroxyphenyl)propionate, 4,4'-thiobis(6-t-butylphenol) and the like.

Ultraviolet absorber: ethylene-2-cyano-3,3'-diphenyl acrylate, 2-(2'-hydroxy-5'-methylphenyl)benzotriazole, 2-(2'-hydroxy-3'-t-butyl-5'-methylphenyl)5-chlorobenzotriazole, 2-hydroxy-4-methoxybenzophenone, 2,2'-dihydroxy-4-methoxybenzophenone, 2-hydroxy-4-octoxybenzophenone and the like.

Plasticizer: dimethyl phthalate, diethyl phthalate, dioctyl phthalate, wax, liquid paraffin, phosphates and the like.

Lubricant: stearamide, oleamide, erucamide, behenamide, ethylenebis(stearamide), methylol stearamide, N-oleylpalmitamide, N-stearylerucamide, liquid paraffin, native paraffin, synthetic paraffin, polyolefin wax, stearyl alcohol, lauryl alcohol, stearic acid, lauric acid, myristic acid, behenic acid, montanic acid, stearyl stearate, stearyl laurate, calcium stearate, magnesium stearyl, zinc stearyl, lead stearyl and the like.

Filler: fiberglass, asbestos, ballastnite, calcium silicate and the like.

Antistatic: glycerol monofatty acid ester, fatty acid diethanolamide, alkyldiethanolamine, alkylsulfonate salt, alkylbenzenesulfonate, alkyltrimethylammonium salt, alkylbenzyldimethylammonium salt, alkyl betaine, alkylimidazolium betaine and the like.

Next, there will be described a method for preparing the resin composition (E) of the present invention by mixing the polyethylene (A), the EVOH (B), the acid-modified polyethylene (C) and the acid-modified polyethylene (D), and a method for molding the resin composition (E).

There are no particular restrictions to a mixing method for preparing the resin composition (E), and examples include: a method comprising dry-blending the polyethylene (A), the EVOH (B), acid-modified polyethylene (C) and acid-modified polyethylene (D) in one time followed by melt-kneading; a method comprising preliminarily melt-kneading a portion of the polyethylene (A), the EVOH (B), the acid-modified polyethylene (C) and the acid-modified polyethylene (D) and adding other components followed by melt-kneading; and a method comprising blending a multilayered-structure containing some or all of the polyethylene (A), the EVOH (B), the acid-modified polyethylene (C) and the acid-modified polyethylene (D) with other components followed by melt-kneading.

A suitable method for preparing the resin composition (E) is a method comprising melt-kneading a recovered multilayered-structure material containing the polyethylene (A) layer, the EVOH (B) layer and the acid-modified polyethylene (C) layer, and a recycling agent containing the acid-modified polyethylene (D). Here, a recovered multilayered-structure material means a recovered material including scraps such as burrs generated during producing a fuel container made of the multilayered-structure and rejected products during molding. Furthermore, a recycling agent is an additive added when such a recovered material is melt-kneaded, and herein, is a recycling agent containing the acid-modified polyethylene (D). A content of the acid-modified polyethylene (D) in the recycling agent is suitably 5 to 100 % by mass. A content of the acid-modified polyethylene (D) is more suitably 10 % by mass or more, further preferably 20 % by mass or more, particularly preferably 50 % by mass or more.

Among others, preferred is a recycling agent comprising the polyethylene (A) and the acid-modified polyethylene (D), where a mass ratio (D/A) of the acid-modified polyethylene (D) to the polyethylene (A) is 0.1 to 10; an MFR (190 °C, under 2.16 kg load) of the polyethylene (A) is 0.01 to 10 g/10 min; an acid value of the acid-modified polyethylene (D) is more than 10 mg KOH/g and 120 mg KOH/g or less; and a ratio (D/A) of an MFR (190 °C, under 2.16 kg load) of the acid-modified polyethylene (D) to an MFR (190 °C, under 2.16 kg load) of the polyethylene (A) is 50 or more. The recycling agent can be extensively used for recovering molded articles containing polyethylene and EVOH besides recovery of a multilayered-structure comprising the polyethylene (A) layer, the EVOH (B) layer and the acid-modified polyethylene (C) layer.

The polyethylene (A) and the acid-modified polyethylene (D) used for the recycling agent can be those described above for the resin composition (E). A mass ratio (D/A) of the acid-modified polyethylene (D) to the polyethylene (A) is 0.1 to 10. By blending the polyethylene (A) with the acid-modified polyethylene (D) in such a mass ratio, the amount of fouling on a screw and/or a die can be further reduced during melt-kneading the recycling agent with a recovered multilayered-structure material containing the polyethylene (A) layer, the EVOH (B) layer and the acid-modified polyethylene (C) layer, and impact resistance of a fuel container obtained is further improved. The mass ratio (D/A) is preferably 0.2 or more, more preferably 0.5 or more, further preferably 1 or more.

In the recycling agent, a ratio (D/A) of an MFR (190 °C, under 2.16 kg load) of the acid-modified polyethylene (D) to an MFR (190 °C, under 2.16 kg load) of the polyethylene (A) must be 50 or more. Thus, the amount of fouling on a screw and/or a die can be further reduced during melt-kneading the recycling agent with a recovered multilayered-structure material containing the polyethylene (A) layer, the EVOH (B) layer and the acid-modified polyethylene (C) layer, and impact resistance of a fuel container obtained is further improved. The ratio (D/A) is suitably 100 or more, more suitably 150 or more, further suitably 200 or more, particularly suitably 400 or more, most suitably 500 or more. Meanwhile, the ratio (D/A) is suitably 20000 or less, more suitably 10000 or less, further suitably 5000 or less, particularly suitably 3000 or less.

In the light of compatibility, it is preferable that the polyethylene (A) contained in the recycling agent is the same polyethylene type as the polyethylene (A) contained in the recovered multilayered-structure.

The total content of the polyethylene (A) and acid-modified polyethylene (D) in the recycling agent is preferably 50 % by mass or more, more preferably 70 % by mass or more, further preferably 80 % by mass or more. The recycling agent can contain additives other than the polyethylene (A) and the acid-modified polyethylene (D) as long as they do not inhibit the effects of the present invention. Such additives can be selected from those described above as other additives contained in the resin composition (E).

When the polyethylene (A) and other components are added to the acid-modified polyethylene (D), preferably these are preliminarily melt-kneaded to prepare a resin composition containing all of these, which is then added to a recovered material. Such a recycling agent is added to the recovered material suitably as pellets. The recovered material is preferably pre-pulverized to a proper size, and suitably the recycling agent pellets are added to the pulverized recovered material.

Starting materials for the resin composition (E) can be only virgin resins, but preferably, a recovered multilayered-structure material is used at least a portion of the starting materials in the light of environmental conservation owing to reduction of the amount of waste materials and the effect of cost reduction. The amount of the recovered material in the resin composition (E) is suitably 50 % by mass or more.

Furthermore, it is also preferable that a recovered material as a starting material for the resin composition (E) consists of a multilayered-structure comprising the resin composition (E) layer besides the polyethylene (A) layer, the EVOH (B) layer and the acid-modified polyethylene (C) layer. That is, it is preferable that a fuel container consisting of a multilayered-structure comprising the resin composition (E) layer is produced, and then, a recovered material of the fuel container is used as a starting material for the resin composition (E) layer in an analogous fuel container.

When the resin composition (E) contains components other than the polyethylene (A), the EVOH (B), the acid-modified polyethylene (C) and the acid-modified polyethylene (D), there are no particular restrictions to a method for combining these components, and they can be combined as described above for each of the (A), (B), (C) and (D) components. When a recovered multilayered-structure material comprising the polyethylene (A) layer, the EVOH (B) layer and the acid-modified polyethylene (C) layer is used for preparation of the resin composition (E), any of the layers in the multilayered-structure can contain other components. Alternatively, a recycling agent containing the acid-modified polyethylene (D) can contain other components.

It is also preferable that the fuel container further comprises the polyethylene (A) layer, the EVOH (B) layer and the acid-modified polyethylene (C) layer, besides the resin composition (E) layer. Exemplary layer structures of such a fuel container are as follows.

Five layers: A/C/B/C/E

Six layers: A/C/B/C/E/A, E/A/C/B/C/A, A/E/C/B/C/E, E/A/C/B/C/E

Seven layers: A/E/C/B/C/E/A, A/E/C/B/C/A/E, E/A/C/B/C/A/E

Among others, the following layer structures are preferable. In these examples, the left is the inside and the right is the outside.

Five layers: (inside) A/C/B/C/E (outside), E/C/B/C/A

Six layers: A/C/B/C/E/A, A/E/C/B/C/A, E/C/B/C/E/A, A/E/C/B/C/E, E/E/C/B/C/A, A/C/B/C/E/E

Seven layers: A/E/C/B/C/E/A, A/E/C/B/C/E/E, E/E/C/B/C/E/A

In the fuel container, it is suitable that the EVOH (B) layer contacts with the acid-modified polyethylene (C) layer in the light of improvement in inter-layer adhesiveness.

A ratio (B/A) of a total thickness of the EVOH (B) layer to a total thickness of the polyethylene (A) layer in the fuel container is suitably 0.5/100 to 20/100. If the thickness ratio (B/A) is less than 0.5/100, barrier properties may be insufficient. Meanwhile, if the thickness ratio (B/A) is more than 20/100, impact resistance may be deteriorated and a cost may increase.

A ratio (C/A) of a total thickness of the acid-modified polyethylene (C) layer to a total thickness of the polyethylene (A) layer in the fuel container is suitably 0.5/100 to 20/100. If the thickness ratio (C/A) is less than 0.5/100, inter-layer adhesiveness may be insufficient. Meanwhile, if the thickness ratio (C/A) is more than 20/100, viscosity matching in the resins used for producing a fuel container may be deteriorated, so that a layer thickness may be uneven during producing the fuel container.

A ratio (E/A) of a total thickness of the resin composition (E) layer to a total thickness of the polyethylene (A) layer in the fuel container is suitably 5/100 to 60/100. If the thickness ratio (E/A) is less than 5/100, a cost may increase. Meanwhile, if the thickness ratio (E/A) is more than 80/100, impact resistance may be deteriorated.

A total thickness of the fuel container can be appropriately determined, depending on its application. The total thickness is suitably 100 to 8000 $\mu$m. With the total thickness of 100 $\mu$m or more, a highly rigid fuel container can be produced. The total thickness is more suitably 500 $\mu$m or more. Meanwhile, with the total thickness of 8000 $\mu$m or less, a flexible fuel container can be obtained. The total thickness is more suitably 7000 $\mu$m or less.

There are no particular restrictions to a method for producing the fuel container; examples include molding methods employed in a common polyethylene such as extrusion molding, blow molding, injection molding and thermoforming. Among these, co-extrusion molding and co-injection molding are suitable, and co-extrusion blow molding is more suitable.

The fuel container preferably comprises the (A) layer or the (E) layer disposed over the inner and the outer sides of the (B) layer via the (C) layer. The fuel container comprises the (A) layer or the (E) layer over both sides of the (B) layer as an intermediate layer via the (C) layer.

In the fuel container, a thickness ratio (I/O) is preferably less than 50/50, where a total thickness of the layers inside the EVOH (B) layer is "I", and a total thickness of the layers outside the (B) layer is "O". In other words, the EVOH (B) layer is disposed at an inner position based on the total thickness. Here, when there is a layer other than the (A) layer, the (C) layer and the (E) layer in a portion of the inside or the outside, its thickness is added to "I" or "O". Here, a thickness of each layer in a fuel container of the present invention means an average thickness in the trunk of the fuel container. By disposing the EVOH (B) layer at such a position, gasoline barrier properties and impact resistance are improved in comparison with the case where the layer is disposed in the middle of the whole layer thickness. More preferably, (I/O) ≤ 45/55, further preferably (I/O) ≤ 40/60, particularly preferably (I/O) ≤ 35/65, most preferably (I/O) ≤ 30/70. Here, the innermost layer is preferably the (A) layer, the (C) layer or the (E) layer. A preferable method for producing a fuel container by molding is a co-extrusion blow molding, but in the method, a cylindrical molten parison must be cut by a mold followed by bonding. Here, a cylindrical opening is closed by bonding such that innermost layers come in contact with each other. With the innermost layer being the (A) layer, the (C) layer or the (E) layer, bonding strength of the closed part (pinch-off part) is improved. In this light, preferably (I/O) ≥ 1/99, more preferably (I/O) ≥ 2/98, particularly preferably (I/O) ≥ 5/95, most preferably (I/O) ≥ 10/90.

Furthermore, it is also preferable that a thickness ratio (X/Y) where a thickness of the (B) layer is "X" and a total thickness is "Y" satisfies formula (1):

$$0.005 \le (X/Y) \le 0.13 \qquad (1).$$

If (X/Y) is less than 0.005, gasoline barrier properties may be deteriorated. The value of (X/Y) is preferably 0.01 or more, more preferably 0.02 or more. Meanwhile, if (X/Y) is 0.13 or more, impact resistance may be deteriorated, and a cost may increase due to the use of a large amount of the EVOH (B). The value of (X/Y) is preferably 0.10 or less, more preferably 0.07 or less.

For a fuel container of the present invention, the amount of deteriorated materials adhering to a screw and/or a die is reduced even when long-term continuous melt molding is conducted during production thereof, resulting in higher productivity. Furthermore, the fuel container exhibits excellent impact resistance with less stripes being generated. A fuel container of the present invention can be suitably used as a fuel container installed in an automobile, a motorcycle, a ship, an aircraft, an electric generator, an industrial machine, an agricultural machine or the like; a portable container for resupplying a fuel to such a fuel container; a container storing a fuel used for operating these machines; or the like.

EXAMPLES

There will be further specifically described the present invention with reference to Examples.

[MFR]

An MFR of a resin was measured in accordance with JIS K 7210.

[Acid value of a resin]

An acid value of an acid-modified polyethylene was measured in accordance with JIS K 2501, and an acid modification amount (mmol/g) was calculated from the acid value. A solvent used was xylene.

[Impact resistance of a test piece]

IZOD impact strength was measured in accordance with JIS K 7110. Using an injection molding machine (Nissei, FS-80S), resin composition pellets were injection-molded to give a molded article (length: 80 mm, width: 10 mm, thickness: 4 mm), which was then notched to give a test piece. Using a digital impact tester (Toyo Seiki Seisaku-sho, Ltd.), IZOD impact strength (kJ/m$^2$) of the test piece obtained was measured at 23 °C and -40 °C.

[Dispersibility]

A cut surface of a resin composition pellet was electron-stained and observed by scanning electron microscopy, to determine a particle size of the EVOH (B) dispersed in the polyethylene (A).

[Measurement of a 50 % failure height for a fuel container]

A fuel container was filled with ethylene glycol to 60 % by volume based on the inner volume, and was stored in a freezer at -40 °C for 3 days.

Then, the container was dropped on a concrete, and a drop height at which the bottle was broken (ethylene glycol in the container leaked) was determined. In terms of a failure height, a 50 % failure height was determined by a calculation method described in a JIS test method ("8. Calculation" section in K7211) using the test results of n = 30.

[Polyethylene (A)]

- A1: a high-density polyethylene with a density of 0.945 g/cm$^3$ and an MFR (measured at 190 °C under 2.16 kg load) of 0.03 g/10 min

[EVOH (B)]

- B1: EVOH with an ethylene content of 32 mol%, a saponification degree of 99.9 mol%, an MFR (190 °C, 2.16 kg load) of 1.6 g/10 min, and a density of 1.19 g/cm$^3$

[Acid-modified polyethylene (C)]

- C1: a maleic-anhydride graft-modified polyethylene "ADMER® GT6" [density: 0.92 g/cm$^3$, MFR (measured at 190 °C under 2.16 kg load): 1.1 g/10 min, acid value: 1.5 mg KOH/g] from Mitsui Chemicals, Inc.

[Acid-modified polyethylene (D)]

- D1 to D7: Maleic-anhydride graft-modified polyethylenes (D1 to D7) obtained by melt-kneading a high-density polyethylene (PE1 with a density of 0.95 g/cm$^3$ or PE2 with a density o 0.93 g/cm$^3$), maleic anhydride (MAn) and 2,5-dimethyl-2,5-bis(t-butylperoxy)hexane (initiator) followed by pelletizing. An acid value and an MFR (measured at 190 °C under 2.16 kg load) of the maleic-anhydride graft-modified polyethylenes (D1 to D7) are shown in Table 1.

Example 1

[Production of a recycling agent]

25 parts by mass of the polyethylene (A1) and 75 parts by mass of the maleic-anhydride graft-modified polyethylene (D1) were dry-blended and the mixture was melt-kneaded using a twin screw extruder (Toyo Seiki Seisakusho, Ltd., "2D25W", diameter: 25 mm) at 215 °C and then pelletized using a pelletizer to afford a recycling agent.

[Evaluation of long-run properties]

Resin composition (E) pellets were produced by dry-blending 2.4 parts by mass of the recycling agent obtained, 100 parts by mass of the polyethylene (A1), 8.6 parts by mass of the EVOH (B1) and 10 parts by mass of the maleic-anhydride graft-modified polyethylene (C1) and melt-kneading the mixture at 215 °C using a single screw extruder (Research Laboratory of Plastics Technology Co., Ltd., "GT-40-26", diameter: 40 mm) followed by pelletization. The melt-kneading conditions of the process are as follows. The resin composition (E) pellets thus obtained were again placed into the same single screw extruder and then melt-kneaded under the same conditions and pelletized to afford resin composition (E) pellets. The process of similarly melt-kneading the resin composition (E) pellets obtained was repeated three times. A low-density polyethylene was supplied to the single screw extruder, which was then operated for 15 min. Then, a screw and a die were removed, and a screw fouling and die build-up (fouling on the die) were separately collected and weighed. Furthermore, impact resistance and dispersibility of the resin composition (E) pellets obtained (product after repeating melt-kneading five times) were evaluated by the above method. These results are shown in Table 2.

Screw rotation speed: 95 rpm

Cylinder and die temperature setting: C1/C2/C3/C4/C5/D = 200 °C /215 °C/215 °C /215 °C/215 °C /215 °C

Relationship between the repetition number of melt-kneading and the amount of die build-up was evaluated. With the repetition number of melt-kneading being 1 to 4, resin composition (E) pellets were produced and the resin composition (E) pellet produced were repeatedly melt-kneaded, and then the amount of die build-up was measured. The production of the resin composition (E) pellets, re-melt-kneading, and measurement of the amount of die build-up were conducted as described above. FIG. 1 is a plot of the amount of die build-up vs. the repetition number of melt-kneading. In this figure, the amount of die build-up after repeating the melt-kneading described above five times is also plotted.

Examples 2 and 3

Resin composition (E) pellets were produced and evaluated (except for evaluation of relationship between the repetition number of melt-kneading and the amount of die build-up) as described in Example 1, except that the amounts of the recycling agent, the EVOH (B) and the acid-modified polyethylene (C) were as shown in Table 2. The results are shown in Table 2.

Examples 4 to 7 and Comparative Examples 1 and 2

Resin composition (E) pellets were produced and evaluated (except for evaluation of relationship between the repetition number of melt-kneading and the amount of die build-up) as described in Example 1, except that the type of the acid-modified polyethylene (D) was as shown in Table 2. The results are shown in Table 2.

Example 8

Resin composition (E) pellets were produced and evaluated (except for evaluation of relationship between the repetition number of melt-kneading and the amount of die build-up) as described in Example 1, except that a recycling agent consisting of the acid-modified polyethylene (D) alone was used. The results are shown in Table 2.

Comparative Example 3

Resin composition pellets were produced and evaluated as described in Example 1, substituting the high-density polyethylene (A1) alone for a recycling agent. The results are shown in Table 2 and FIG. 1.

[Table 1]

|  |  | D1 | D2 | D3 | D4 | D5 | D6 | D7 |
|---|---|---|---|---|---|---|---|---|
| Mixing ratio (parts by mass) | PE1 | 100 | 100 | 100 | - | 100 | 100 | 100 |
|  | PE2 | - | - | - | 100 | - | - | - |
|  | MAn | 3 | 1 | 1 | 1 | 2 | 0.5 | 0.1 |
|  | Initiator | 0.1 | 0.02 | 0.03 | 0.03 | 0.03 | 0.03 | 0.03 |
| MFR (g/10 min) | | 25 | 14 | 23 | 470 | 7 | 1.8 | 1.1 |
| Acid value (mg KOH/g) | | 47 | 14 | 16 | 15 | 31 | 9 | 1.5 |

[Table 2]

| | | | Unit | Example 1 | Example 2 | Example 3 | Example 4 | Example 5 | Example 6 | Example 7 | Example 8 |
|---|---|---|---|---|---|---|---|---|---|---|---|
| Recycling agent | Acid-modified PE (D) | Type | - | D1 | D1 | D1 | D2 | D3 | D4 | D5 | D1 |
| | | Acid value | mg KOH/g | 47 | 47 | 47 | 14 | 16 | 15 | 31 | 47 |
| | | MFR | g/10min | 25 | 25 | 25 | 14 | 23 | 470 | 13.0 | 25 |
| | | Content | parts by mass | 75 | 75 | 75 | 75 | 75 | 75 | 75 | 75 |
| | PE (A) | Type | - | A1 | A1 | A1 | A1 | A1 | A1 | A1 | - |
| | | MFR | g/10min | 0.03 | 0.03 | 0.03 | 0.03 | 0.03 | 0.03 | 0.03 | - |
| | | Content | parts by mass | 25 | 25 | 25 | 25 | 25 | 25 | 25 | - |
| | MFR ratio (D/A) | | - | 833 | 833 | 833 | 467 | 767 | 15667 | 233 | - |
| Resin composition (E) | Recycling agent | Amount | parts by mass | 2.4 | 1 | 10 | 2.4 | 2.4 | 2.4 | 2.4 | 2.4 |
| | PE (A) | Type | - | A1 | A1 | A1 | A1 | A1 | A1 | A1 | A1 |
| | | MFR | g/10min | 0.03 | 0.03 | 0.03 | 0.03 | 0.03 | 0.03 | 0.03 | 0.03 |
| | | Content | parts by mass | 100 | 100 | 100 | 100 | 100 | 100 | 100 | 100 |
| | EVOH (B) | Type | - | B1 | B1 | B1 | B1 | B1 | B1 | B1 | B1 |
| | | Content | parts by mass | 8.6 | 1 | 15 | 8.6 | 8.6 | 8.6 | 8.6 | 8.6 |
| | Acid-modified PE (C) | Type | - | C1 | C1 | C1 | C1 | C1 | C1 | C1 | C1 |
| | | Acid value | mg KOH/g | 1.5 | 1.5 | 1.5 | 1.5 | 1.5 | 1.5 | 1.5 | 1.5 |
| | | Content | parts by mass | 10 | 1 | 15 | 10 | 10 | 10 | 10 | 10 |
| | MFR ratio (D/A) | | - | 833 | 833 | 833 | 467 | 767 | 15667 | 233 | 833 |
| Evaluation | Amount of die-build up | | mg | 370 | 210 | 450 | 480 | 490 | 530 | 290 | 470 |
| | Amount of screw fouling | | mg | 0 | 0 | 10 | 22 | 29 | 31 | 14 | 11 |
| | Dispersibility | | μm | 0.17 | 0.15 | 0.21 | 0.23 | 0.22 | 0.24 | 0.21 | 0.21 |
| | Impact strength (23 °C) | | kJ/m² | 83 | 83 | 76 | 45 | 42 | 41 | 83 | 74 |
| | Impact strength (-40 °C) | | kJ/m² | 46 | 47 | 41 | 31 | 29 | 27 | 49 | 33 |

[Table 2] (continued)

| | | | Unit | Comparative Example 1 | Comparative Example 2 | Comparative Example 3 |
|---|---|---|---|---|---|---|
| Recycling agent | Acid-modified PE (D) | Type | - | D6 | D7 | - |
| | | Acid value | mg KOH/g | 9 | 1.5 | - |
| | | MFR | g/10min | 1.8 | 1.1 | - |
| | | Content | parts by mass | 75 | 75 | - |
| | PE (A) | Type | - | A1 | A1 | A1 |
| | | MFR | g/10min | 0.03 | 0.03 | 0.03 |
| | | Content | parts by mass | 25 | 25 | 100 |
| | MFR ratio (D/A) | | - | 60 | 37 | - |
| | Recycling agent | Amount | parts by mass | 2.4 | 2.4 | 2.4 |
| Resin composition (E) | PE (A) | Type | - | A1 | A1 | A1 |
| | | MFR | g/10min | 0.03 | 0.03 | 0.03 |
| | | Content | parts by mass | 100 | 100 | 100 |
| | EVOH (B) | Type | - | B1 | B1 | B1 |
| | | Content | parts by mass | 8.6 | 8.6 | 8.6 |
| | Acid-modified PE (C) | Type | - | C1 | C1 | C1 |
| | | Acid value | mg KOH/g | 1.5 | 1.5 | 1.5 |
| | | Content | parts by mass | 10 | 10 | 10 |
| | MFR ratio (D/A) | | - | 60 | 37 | - |
| Evaluation | Amount of die-build up | | mg | 830 | 820 | 880 |
| | Amount of screw fouling | | mg | 45 | 44 | 48 |
| | Dispersibility | | μm | 0.24 | 0.27 | 0.28 |
| | Impact strength (23 °C) | | kJ/m² | 34 | 35 | 30 |
| | Impact strength (-40 °C) | | kJ/m² | 21 | 20 | 17 |

For a resin composition (E, Examples 1 to 8) of the present invention comprising acid-modified polyethylene (C) having an acid value of 0.1 to 9 mg KOH/g and acid-modified polyethylene (D) having an acid value of more than 10 mg KOH/g and 120 mg KOH/g or less, in which a ratio (D/A) of an MFR of the acid-modified polyethylene (D) to an MFR of the polyethylene (A) is 50 or more, the amount of die build-up and the amount of screw fouling were small, the EVOH (B) exhibited excellent dispersibility, and a molded article obtained had higher impact strength. In contrast, all of the above performances were insufficient for a resin composition (Comparative Example 2) comprising the acid-modified polyethylene (C) and an acid-modified polyethylene having an acid value of less than 10 mg KOH/g, in which an MFR ratio (D/A) was less than 50; a resin composition (Comparative Example 1) comprising the acid-modified polyethylene (C) and an acid-modified polyethylene having an acid value of less than 10 mg KOH/g; and a resin composition (Comparative Example 3) comprising the acid-modified polyethylene (C) alone as an acid-modified polyethylene.

As shown in FIG. 1, when a resin composition (Comparative Example 3) comprising maleic-anhydride graft-modified polyethylene (C1) alone as an acid-modified polyethylene was repeatedly melt-kneaded, a certain amount of die build-up adhered irrespective of the repetition number. In contrast, when a resin composition (E, Example 1) of the present invention comprising, in addition to (C1), a maleic-anhydride graft-modified polyethylene (D1) having an acid value of 47 mg KOH/g was repeatedly melt-kneaded, the amount of adhered die build-up surprisingly decreased as the repetition number increased.

Example 9

[Production of a recovered material]

Using polyethylene (A1), EVOH (B1) and maleic-anhydride graft-modified polyethylene (C1), a three-material, five-layered multilayered film (A1:208 μm/C1:16 μm/B1:32 μm/C1:16 μm/A1:208 μm) was produced under the following conditions.

• Polyethylene (A1)

Extruder: 32 mmφ extruder GT-32-A (Research Laboratory of Plastics Technology Co., Ltd.)
Extrusion temperature: supply section/compression section/metering section/die = 170/210/220/220 °C
Die: 300 mm width coat hanger die (Research Laboratory of Plastics Technology Co., Ltd.)

• EVOH (B)

Extruder: 20 mmφ extruder Labo type ME CO-EXT (Toyo Seiki Seisaku-sho, Ltd.)
Extrusion temperature: supply section/compression section/metering section/die = 180/210/220/220 °C
Die: 300 mm width coat hanger die (Research Laboratory of Plastics Technology Co., Ltd.)

• Maleic-anhydride graft-modified polyethylene (C1)

Extruder: 20 mmφ extruder SZW20GT-20MG-STD (Technovel Corporation)
Extrusion temperature: supply section/compression section/metering section/die = 170/210/220/220 °C
Die: 300 mm width coat hanger die (Research Laboratory of Plastics Technology Co., Ltd.)
The multilayered film obtained was pulverized by an 8 mmφ diameter-mesh pulverizer to provide a recovered material. A mass ratio in the recovered material obtained was A1/B1/C1 = 100/10.2/7.8.

[Production of a multilayered film]

A mixed resin was produced by dry-blending 118.6 parts by mass of the recovered material obtained and 2.4 parts by mass of the recycling agent obtained in Example 1. Using the mixed resin obtained, polyethylene (A1), EVOH(B1) and maleic-anhydride graft-modified polyethylene (C1), a four-material, six-layered multilayered film (A1: 208 μm/mixed resin [resin composition (E)]:320 μm/C1:16 μm/B1:32 μm/C1:16 μm/A1:208 μm) was produced. Here, the polyethylene (A1), the EVOH (B) and the maleic-anhydride graft-modified polyethylene (C1) were molded under the same conditions as those for producing the above recovered material, and the mixed resin [resin composition (E) layer] was molded under the following conditions.
Extruder: 32 mmφ extruder GT-32-A (Research Laboratory of Plastics Technology Co., Ltd.)
Extrusion temperature: supply section/compression section/metering section/die = 170/210/220/220 °C
Die: 300 mm width coat hanger die (Research Laboratory of Plastics Technology Co., Ltd.)
Multilayered films were continuously produced, and an appearance of a multilayered film obtained after 100 hours was evaluated in accordance with the following criteria. The results are shown in Table 3.

A: Stripes were observed in the multilayered film.
B: No stripes were observed in the multilayered film.

Comparative Example 4

A multilayered film was produced and evaluated as described in Example 9, substituting high-density polyethylene (A1) alone for a recycling agent. The results are shown in Table 3.

[Table 3]

| | | | Unit | Example 9 | Comparative Example 4 |
|---|---|---|---|---|---|
| Resin composition (E) | Recovered material | PE (A) | - | A1 | A1 |
| | | Thickness ratio | % | 52 | 52 |
| | | EVOH (B) | - | B1 | B1 |
| | | Thickness ratio | % | 4 | 4 |
| | | Acid-modified PE (C) | - | C1 | C1 |
| | | Thickness ratio | % | 4 | 4 |
| | Recycling agent | Type | - | A1 | A1 |
| | | Content | parts by mass | 25 | 100 |
| | | Type | - | D1 | - |
| | | Content | parts by mass | 75 | - |
| | Mass ratio (Recovered material / Recycling agent) | | - | 117.2 / 2.4 | 117.2 / 2.4 |
| Multilayered-structure | PE (A) layer | Type | - | A1 | A1 |
| | | Thickness ratio | % | 52 | 52 |
| | EVOH (B) layer | Type | - | B1 | B1 |
| | | Thickness ratio | % | 4 | 4 |
| | Acid-modified PE (C) layer | Type | - | C1 | C1 |
| | | Thickness ratio | % | 4 | 4 |
| | Resin composition layer | Thickness ratio | % | 40 | 40 |
| Evaluation | | Stripes | - | A | B |

Example 10

Using A1 as polyethylene (A), B1 as EVOH (B), maleic-anhydride graft-modified polyethylene (C1) as acid-modified polyethylene (C) and resin composition (E) pellets in Example 1 (produced by repeatedly melt-kneading five times) as a recovered material, a four-material, six-layered parison having a layer structure of (inside)A/C/B/C/E/A(outside) was extruded at 210 °C by a extrusion blow molding machine "TB-ST-6P" from Suzuki Seikosho; blown in a mold at 15 °C; and then cooled for 20 sec to form a 500 mL fuel container (bottom diameter: 100 mm, height: 64 mm) with a total layer thickness of 5100 $\mu$m [(inside)A/C/B/C/E/A(outside) = 350/50/50/50/850/700 $\mu$m]. The fuel container thus formed was used for evaluation of a 50 % failure height. The evaluation results are shown in Table 4.

Example 11

A fuel container was formed and evaluated for a 50 % failure height as described in Example 10, except that a layer structure was (inside)A/C/E/C/B/A(outside) = 350/50/850/50/50/700 $\mu$m. The evaluation results are shown in Table 4.

Comparative Examples 5 and 6

A fuel container was formed and evaluated for a 50 % failure height as described in Example 10, substituting the resin composition in Comparative Example 1 or 2 for the resin composition (E) in Example 1. The evaluation results are shown in Table 4.

[Table 4]

|  |  |  | Unit | Example 10 | Example 11 | Comparative Example 5 | Comparative Example 6 |
|---|---|---|---|---|---|---|---|
| Fuel container | PE (A) layer | Type | - | A1 | A1 | A1 | A1 |
|  | EVOH (B) layer | Type | - | B1 | B1 | B1 | B1 |
|  | Acid-modified PE (C) layer | Type | - | C1 | C1 | C1 | C1 |
|  | Resin composition (E) layer | Type | - | Example 1 | Example 1 | Comparative Example 1 | Comparative Example 2 |
|  | Thickness ratio (I/O) |  | - | 4 | 1 | 4 | 4 |
|  | Thickness ratio (X/Y) |  | - | 0.024 | 0.024 | 0.024 | 0.024 |
| Evaluation |  | 50 % failure height | - | 2.1 | 1.7 | 1.1 | 0.8 |

**Claims**

1. A fuel container comprising a layer made of a resin composition (E) comprising polyethylene (A), ethylene-vinyl alcohol copolymer (B), acid-modified polyethylene (C) and acid-modified polyethylene (D), wherein
   the resin composition (E) contains 0.1 to 20 parts by mass of ethylene-vinyl alcohol copolymer (B), 0.1 to 20 parts by mass of acid-modified polyethylene (C) and 0.1 to 10 parts by mass of acid-modified polyethylene (D) based on 100 parts by mass of polyethylene (A),
   an MFR (190 °C, under 2.16 kg load - measured in accordance with JIS K 7210) of the polyethylene (A) is 0.01 to 10 g/10 min,
   an acid value (measured in accordance with JIS K 2501) of the acid-modified polyethylene (C) is 0.1 to 9 mg KOH/g,
   an acid value (measured in accordance with JIS K 2501) of the acid-modified polyethylene (D) is more than 10 mg KOH/g and 120 mg KOH/g or less, and
   a ratio (D/A) of an MFR (190 °C, under 2.16 kg load - measured in accordance with JIS K 7210) of the acid-modified polyethylene (D) to an MFR (190 °C, under 2.16 kg load - measured in accordance with JIS K 7210) of the polyethylene (A) is 50 or more.

2. The fuel container as claimed in Claim 1, further comprising
   a polyethylene (A) layer, an ethylene-vinyl alcohol copolymer (B) layer and an acid-modified polyethylene (C) layer, wherein the (A) layer or the resin composition (E) layer is disposed over the inner and the outer sides of the (B) layer via the (C) layer.

3. The fuel container as claimed in Claim 2, wherein
   a thickness ratio (I/O) is less than 50/50, where a total thickness of the layers inside the ethylene-vinyl alcohol copolymer (B) layer is "I", and a total thickness of the layers outside the (B) layer is "O", and
   a thickness ratio (X/Y) where a thickness of the (B) layer is "X" and a total thickness is "Y" satisfies formula (1):

$$0.005 \leq (X/Y) \leq 0.13 \qquad (1).$$

4. A method for producing the fuel container as claimed in any of Claims 1 to 3, comprising melt-kneading a recovered multilayered-structure material comprising a polyethylene (A) layer, an ethylene-vinyl alcohol copolymer (B) layer and an acid-modified polyethylene (C) layer, and a recycling agent containing the acid-modified polyethylene (D), followed by molding.

**Patentansprüche**

1. Kraftstoffbehälter, umfassend eine Schicht, hergestellt aus einer Harzzusammensetzung (E), umfassend Polyethylen (A), Ethylen-Vinylalkohol-Copolymer (B), säuremodifiziertes Polyethylen (C) und säuremodifiziertes Polyethylen (D), wobei

   die Harzzusammensetzung (E) 0,1 bis 20 Massenteile des Ethylen-Vinylalkohol-Copolymers (B), 0,1 bis 20 Massenteile des säuremodifizierten Polyethylens (C) und 0,1 bis 10 Massenteile des säuremodifizierten Polyethylens (D), basierend auf 100 Massenteile des Polyethylens (A), enthält,

   eine MFR (190 °C, unter 2,16 kg Last - gemessen gemäß JIS K 7210) des Polyethylens (A) 0,01 bis 10 g/10 min beträgt,

   ein Säurewert (gemessen gemäß (JIS K 2501) des säuremodifizierten Polyethylens (C) 0,1 bis 9 mg KOH/g beträgt,

   ein Säurewert (gemessen gemäß (JIS K 2501) des säuremodifizierten Polyethylens (D) mehr als 10 mg KOH/g und 120 mg KOH/g oder weniger beträgt, und

   ein Verhältnis (D/A) einer MFR (190 °C, unter 2,16 kg Last - gemessen gemäß JIS K 7210) des säuremodifizierten Polyethylens (D) zu einer MFR (190°C unter 2,16 kg Last - gemessen gemäß JIS K 7210) des Polyethylens (A) 50 oder mehr beträgt.

2. Kraftstoffbehälter nach Anspruch 1, weiter umfassend

   eine Polyethylen (A)-Schicht, eine Ethylen-Vinylalkohol-Copolymer (B)-Schicht und eine säuremodifiziertes Polyethylen (C)-Schicht,

   wobei die (A)-Schicht oder die Harzzusammensetzung (E)-Schicht über die Innen- und die Außenseiten der (B)-Schicht mittels der (C)-Schicht angeordnet ist.

3. Kraftstoffbehälter nach Anspruch 2, wobei

   ein Dickenverhältnis (I/O) weniger als 50/50 beträgt, worin eine Gesamtdicke der Schichten innerhalb der Ethylen-Vinylalkohol-Copolymer (B)-Schicht "I" ist und eine Gesamtdicke der Schichten außerhalb der (B)-Schicht "O" ist, und ein Dickenverhältnis (X/Y), worin eine Dicke der (B)-Schicht "X" ist und eine . Gesamtdicke "Y" ist, die Formel (1) erfüllt:

$$0,005 \leq (X/Y) \leq 0,13 \ (1).$$

4. Verfahren zum Herstellen des Kraftstoffbehälters nach einem der Ansprüche 1 bis 3, umfassend das Schmelzkneten eines rückgewonnenen Mehrschichtstrukturmaterials, umfassend eine Polyethylen (A)-Schicht, eine Ethylen-Vinylalkohol-Copolymer (B)-Schicht und eine säuremodifiziertes Polyethylen (C)-Schicht, und eines Rückgewinnungsmittels, enthaltend das säuremodifizierte Polyethylen (D), gefolgt von Formen.

**Revendications**

1. Récipient à carburant comprenant une couche constituée d'une composition de résine (E) comprenant un polyéthylène (A), un copolymère éthylène-alcool vinylique (B), d'un polyéthylène modifié par un acide (C) et d'un polyéthylène modifié par un acide (D), où

   la composition de résine (E) contient 0,1 à 20 parties en masse d'un copolymère éthylène-alcool vinylique (B), 0,1 à 20 parties en masse d'un polyéthylène modifié par un acide (C) et 0,1 à 10 parties en masse d'un polyéthylène modifié par un acide (D), sur base de 100 parties en masse du polyéthylène (A), l'indice defluidité (190°C, sous une charge de 2,16 kg - mesurée selon JIS K 7210) du polyéthylène (A) se situe dans l'intervalle allant de 0,01 à 10 g/10 minutes,

   l'indice d'acide (mesuré selon JIS K2501) du polyéthylène modifié par un acide (C) se situe dans l'intervalle allant de 0,1 à 9 mg KOH/g,

   l'indice d'acide (mesuré selon JIS K2501) du polyéthylène modifié par un acide (D) se situe dans l'intervalle allant de 10 à 120 mg KOH/g, et

   le rapport (D/A) de l'indice de fluidité (190°C, sous une charge de 2,16 kg - mesurée selon JIS K 7210) du polyéthylène modifié par un acide (D) à l'indice de fluidité (190°C, sous une charge de 2,16 kg - mesurée selon JIS K 7210) du polyéthylène (A) est de 50 ou plus.

2. Récipient à carburant selon la revendication 1, comprenant en outre, une couche du polyéthylène (A), une couche du copolymère éthylène-alcool vinylique (B) et une couche du polyéthylène modifié par un acide (C),
où la couche (A) ou la couche de la composition de résine (E) est disposée sur les faces intérieure et extérieure de la couche (B) via la couche (C).

3. Récipient à carburant selon la revendication 2, où
le rapport d'épaisseur (I/O) est inférieur à 50/50, où l'épaisseur totale des couches dans la couche de copolymère éthylène-alcool vinylique (B) est « I » et l'épaisseur totale des couches hors couche (B) est « O », et
le rapport d'épaisseur (X/Y), où l'épaisseur de la couche (B) est « X » et l'épaisseur totale est « Y » satisfait la formule (1) :

$$0,005 \leq (X/Y) \leq 0,13 \qquad (1).$$

4. Procédé de production d'un récipient à carburant selon l'une quelconque des revendications 1 à 3, comprenant le malaxage à l'état fondu d'un matériau pour structure multicouche recouvert comprenant une couche de polyéthylène (A), une couche de copolymère éthylène-alcool vinylique (B) et une couche de polyéthylène modifié par un acide (C), et un agent de recyclage contenant le polyéthylène modifié par un acide (D), suivi d'un moulage.

[FIG. 1]

Scatter plot. Y-axis: Amount of die-build up (mg), ranging 0 to 300. X-axis: Repetition number of melt-kneading, ranging 0 to 6. Legend: + Comparative Example 3; × Example 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9029904 A
- WO 2012060371 A
- WO 2005105437 A1